# EUROPEAN PATENT APPLICATION

(11) **EP 4 851 338 A1**
(43) Date of publication of application: **09.12.2026**
(21) Application number: 24922055.9
(22) Date of filing: 01.08.2024
(51) Int. Cl.: C25B 11/031, B23K 26/38

(54) **SHEET-FORM TITANIUM POROUS BODY, METHOD FOR PRODUCING SAME, AND USE THEREOF**

(30) Priority: 29.01.2024 JP 2024011106
(71) Applicant: TOHO TITANIUM CO., LTD., Chigasaki-shi, Kanagawa 253-8510 (JP)
(72) Inventor: MIZOH, Wataru, Chigasaki City, Kanagawa 253-8510 (JP)
(74) Representative: Heeschen Pültz Patentanwälte PartGmbB
(86) International application number: PCT/JP2024/027556
(87) International publication number: WO 2025/163942

(57) **Abstract**

The porous titanium sheet has a thickness equal to or greater than 40 µm and equal to or less than 500 µm and porosity equal to or greater than 30% and equal to or less than 50%. A surface roughness of a first main surface of the porous titanium sheet is lower than a surface roughness of a second main surface opposing the first main surface. At a peripheral portion, a number of first protrusions protruding toward a side of the first main surface and having a height equal to or greater than 30 µm is equal to or less than a number of second protrusions protruding toward a side of the second main surface at the peripheral portion and having a height equal to or greater than 30 µm.

## Description

### TECHNICAL FIELD

An embodiment of the present invention relates to a porous titanium sheet, a manufacturing method and usage thereof, and a jig for realizing the manufacturing method.

### BACKGROUND ART

Porous metal sheets containing a metal (0-valent metal) have been widely used for filters, electrodes for secondary batteries, solid polymer-electrolyte fuel-cell collectors, and catalyst supports, and the like. Porous metal sheets are subjected to the application after being cut with lasers or blades according to their applications (see Patent Literature 1 and 2). In the Patent Literature 1, it is disclosed that a pair of blades facing each other can be used to cut a long porous metal sheet extending in a specific direction. In the Patent Literature 2, it is disclosed that laser cutting of a laminate of a porous metal sheet and an adjacent layer allows the side surfaces of the porous metal sheet and the adjacent layer to be bonded to each other at the laser-cutting point resulting in a so-called laminate of the porous metal sheet and the adjacent layer. In this method, an anchoring effect is created by forming icicle-like burrs at the laser cutting point in order to firmly bond the porous metal sheet and the adjacent layer. In other words, this method is a cutting method in which burrs are intentionally formed.

### CITATION LIST

### PATENT LITERATURE

Patent Literature 1: International Patent Publication No. 2020/039693
Patent Literature 2: Japanese Laid-Open Patent Publication No. 2011-106023

### SUMMARY OF INVENTION

### TECHNICAL PROBLEM

An object of an embodiment of the present invention is to provide a porous metal sheet including titanium, that is, a porous titanium sheet and an usage thereof. Alternatively, an object of an embodiment of the present invention is to provide a method capable of producing a porous titanium sheet at a high efficiency and a high yield and to provide a jig for realizing this method.

### SOLUTION TO PROBLEM

An embodiment of the present invention is a porous titanium sheet. The porous titanium sheet has a thickness equal to or greater than 40 µm and equal to or less than 500 µm and porosity equal to or greater than 30% and equal to or less than 50%. A surface roughness of a first main surface of the porous titanium sheet is lower than a surface roughness of a second main surface opposing the first main surface. A number of first protrusions protruding toward a side of the first main surface and having a height equal to or greater than 30 µm at a peripheral portion is equal to or less than a number of second protrusions protruding toward a side of the second main surface at the peripheral portion and having a height equal to or greater than 30 µm at the periphery portion.

An embodiment of the present invention is a usage of the porous titanium sheet as a porous transporting layer in a polymer-electrolyte membrane-type water-electrolysis apparatus.

An embodiment of the present invention is a method for manufacturing hydrogen using the porous titanium sheet in a polymer-electrolyte membrane-type water-electrolysis apparatus.

An embodiment of the present invention is a manufacturing method of a porous titanium sheet. The manufacturing method includes: arranging a mother sheet including porous titanium on a jig having at least one stage having at least one through hole, a frame surrounding the at least one stage and spaced away from the at least one stage, and at least one connecting portion connecting the at least one stage and the frame so as to cover the at least one through hole and a gap between the at least one stage and the frame; adsorbing the mother sheet over the jig; and scanning the mother sheet with laser light emitted from a fiber laser along the gap to cut the mother sheet.

An embodiment of the present invention is a jig for manufacturing a porous titanium sheet. The jig includes at least one stage having at least one through hole, a frame surrounding the at least one stage and spaced away from the at least one stage, and at least one connecting portion connecting the at least one stage and the frame.

### BRIEF DESCRIPTION OF DRAWINGS

FIG. 1 is a schematic view showing a manufacturing method of a porous titanium sheet according to an embodiment of the present invention.
FIG. 2A is a schematic top view of a jig according to an embodiment of the present invention.
FIG. 2B is a schematic side view of a jig according to an embodiment of the present invention.
FIG. 3A is a schematic cross-sectional view of a jig according to an embodiment of the present invention.
FIG. 3B is a schematic cross-sectional view of a jig according to an embodiment of the present invention.
FIG. 3C is a schematic cross-sectional view of a jig according to an embodiment of the present invention.
FIG. 3D is a schematic cross-sectional view of a jig according to an embodiment of the present invention.
FIG. 4A is a schematic side view including a jig according to an embodiment of the present invention.
FIG. 4B is a schematic top view of an airflow-adjusting table used with a jig according to an embodiment of the present invention.
FIG. 5A is a schematic top view showing a manufacturing method of a porous titanium sheet according to an embodiment of the present invention.
FIG. 5B is a schematic cross-sectional view showing a manufacturing method of a porous titanium sheet according to an embodiment of the present invention.
FIG. 6A is a schematic cross-sectional view showing a manufacturing method of a porous titanium sheet according to an embodiment of the present invention.
FIG. 6B is a schematic top view showing a manufacturing method of a porous titanium sheet according to an embodiment of the present invention.
FIG. 7 is a schematic top view of a jig according to an embodiment of the present invention.
FIG. 8A is a schematic perspective view of a porous titanium sheet according to an embodiment of the present invention.
FIG. 8B is a schematic side view of a porous titanium sheet according to an embodiment of the present invention.
FIG. 9A is a schematic perspective view of a porous titanium sheet according to an embodiment of the present invention.
FIG. 9B is a schematic side view of a porous titanium sheet according to an embodiment of the present invention.
FIG. 10A is a photograph of a mother sheet prepared in the Example.
FIG. 10B is a photograph of a porous titanium sheet prepared in the Example.

### DESCRIPTION OF EMBODIMENTS

Hereinafter, a manufacturing method of a porous titanium sheet according to an embodiment of the present invention and the porous titanium sheet manufactured in accordance with this manufacturing method are explained with reference to the drawings. The invention can be implemented in a variety of different modes within its concept and should not be interpreted only within the disclosure of the embodiments exemplified below.

The drawings may be illustrated so that the width, thickness, shape, and the like are illustrated more schematically compared with those of the actual modes in order to provide a clearer explanation. However, they are only an example, and do not limit the interpretation of the invention. In the specification and the drawings, the same reference number is provided to an element that is the same as that which appears in preceding drawings, and a detailed explanation may be omitted.

### 1. Manufacturing Method of Porous Titanium Sheet

Hereinafter, a manufacturing method of the porous titanium sheet according to an embodiment of the present invention is described. Porous titanium sheets are used as electrode materials and filters which can be used in highly corrosive environments because of their high liquid permeability, air permeability, and electrical conductivity as well as excellent corrosion resistance. In particular, porous titanium sheets with thicknesses ranging from tens to hundreds of micrometers are useful as porous transporting layers (PTL) in polymer-electrolyte membrane-type (PEM) water-electrolysis apparatus.

In this manufacturing method, a large porous titanium sheet having a larger area than the finally manufactured porous titanium sheet is produced, which is then appropriately cut to manufacture the porous titanium sheet having a desired size and shape. Hereafter, this large porous titanium sheet is referred to as a mother sheet.

The mother sheet and the porous titanium sheet substantially consist of pure titanium, which is also called industrial pure titanium, and a purity thereof is equivalent to, for example, JIS H 4600 (2012) pure titanium class 1 to 4, typically class 1 to 2. More specifically, the titanium content in the mother sheet and the porous titanium sheet is equal to or greater than 97 wt% or 98 wt%. The upper limit of the titanium content is equal to or less than 99.8 wt% or 99 wt%. The titanium content is determined by subtracting the total content of metal components other than titanium and non-metal components such as oxygen from 100 wt%. Note that the oxygen content may be higher than that of industrial pure titanium depending on the manufacturing conditions of the porous titanium sheet. For example, the paste method described below tends to provide porous titanium sheets having the oxygen content higher than that manufactured by a dry method.

### (1) Preparation of Mother Sheet

There are no restrictions on the preparation method of the mother sheet, and the mother sheet may be prepared by, for example, a dry method or a paste method. In the dry method, after titanium fine particles or titanium fiber with a purity equal to or greater than 99% are stacked over a setter and leveled to form a sheet shape, heating and sintering are performed at a high temperature (*e.g*., equal to or higher than 950 °C, for example), by which the mother sheet can be obtained. At this time, it is preferable to coat the setter with a releasing agent such as boron nitride and titanium boride and then stack the titanium fine particles or the titanium fiber thereover in order to facilitate separation from the setter. Although the shape of the titanium fine particles may be spherical, employment of a shape deviating from a spherical shape, such as titanium fine particles produced by the hydrogenation dehydrogenation method (HDH powder), increases the number of bonding points between the titanium fine particles. As a result, a mother sheet with a three-dimensional network structure having numerous pores therein can be obtained. When titanium fine particles are used, a mother sheet with a spongy three-dimensional network structure can be obtained. On the other hand, when titanium fiber is used, a mother sheet with a nonwoven fabric-like three-dimensional network structure can be obtained.

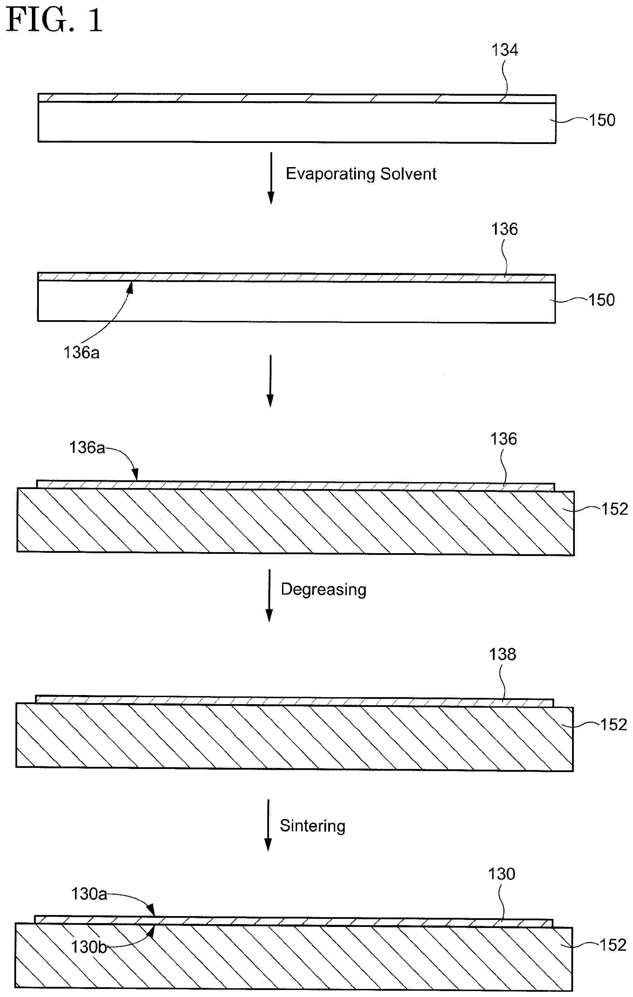

In the paste method, a paste containing titanium fine particles or titanium fiber, a binder, and a solvent is first prepared. Binders include celluloses, a poly(vinyl alcohol) resin, an acrylic resin, and a poly(vinyl butyral) resin, and the like. The solvents include alcohols such as ethanol and isopropanol, aromatic solvents such as toluene and xylene, hydrocarbons such as cyclohexane, and ketones such as methyl ethyl ketone. The paste may further contain additives such as defoaming agents, dispersants, leveling agents, and plasticizers. However, it is preferred that foaming agents and water not be included. As shown in FIG. 1, the paste 134 is applied over a substrate 150, and the solvent is evaporated under room temperature or heated conditions (*e.g*., from 80°C to 160°C), by which a sheet-like green body 136 is obtained.

This green body 136 is peeled off from the substrate and arranged over a setter 152 serving as a supporting substrate. At this time, the green body 136 is preferably arranged so that a surface 136a of the green body 136, which has been in contact with the substrate 150, is positioned on the opposite side to the setter 152 (see FIG. 1). The green body 136 arranged over the setter 152 is then heated in an atmosphere containing oxygen, such as air, to perform degreasing. The degreasing may be performed, for example, by performing heating at a temperature equal to or higher than 300°C and equal to or lower than 450°C for 3 hours to 20 hours. As a result, the binder and the additives are thermally decomposed or volatilized, resulting in a sheet-like brown body 138 substantially consisting of titanium.

Furthermore, the brown body 138 arranged over the setter 152 is subjected to a sintering treatment at a high temperature ranging from approximately 750 °C to 1100 °C after degreasing to obtain the mother sheet 130. Even when the paste method is used, the mother sheet 130 with a spongy or non-woven three-dimensional network structure can be obtained, similar to the dry method. When the paste does not contain water and a foaming agent, the surface smoothness of the produced mother sheet 130 tends to be excellent, and in particular, the surface of the mother sheet 130 derived from the surface 136a of the green body 136, which has been in contact with the substrate 150 (hereinafter referred to as a surface for convenience) 130a, has a smaller surface roughness than the surface opposite to the surface 130a (hereinafter referred to as a back surface). For example, the maximum height Rz of the surface 130a, which is an indicator of surface roughness, is equal to or greater than 1.0 µm and equal to or less than 10 µm, equal to or greater than 1.0 µm and equal to or less than 7 µm, or equal to or greater than 1.0 µm and equal to or less than 5 µm. On the other hand, the maximum height Rz of the back surface 130b is greater than that of the surface 130a and exceeds 10 µm, for example. The maximum height Rz of the surfaces may be obtained in accordance with ISO (International Organization for Standardization) 4287-1997.

There is no restriction on the size of the mother sheet 130, as long as the mother sheet 130 is greater than the finally manufactured porous titanium sheet. For example, the mother sheet 130 may have a rectangular shape with one side equal to or longer than 200 mm and equal to or shorter than 2000 mm. The thickness of the mother sheet 130 may also be arbitrarily determined, where the thickness may be selected from a range, for example, equal to or greater than 10 µm and equal to or less than 3000 µm, equal to or greater than 40 µm and equal to or less than 1000 µm, or equal to or greater than 40 µm and equal to or less than 500 µm and is typically equal to or greater than 40 µm and equal to or less than 300 µm. The porosity of the mother sheet 130 is also not restricted and is preferably equal to or greater than 30% and equal to or less than 50%. Porous titanium sheets with smooth surfaces tend to have smaller porosity to some extent. In addition, since the ion exchange membrane and the porous titanium sheet are sometimes placed under pressure in the cell of a (PEM)-type water-electrolysis apparatus, damage to the ion exchange membrane can be effectively suppressed when the surface of the porous titanium sheet is smooth.

### (2) Cutting Mother Sheet

Hereinafter, a cutting method of the mother sheet 130 is described below. The porous titanium sheet is manufactured by appropriately cutting the mother sheet 130 using the jig described in detail below.

### (a) Jig

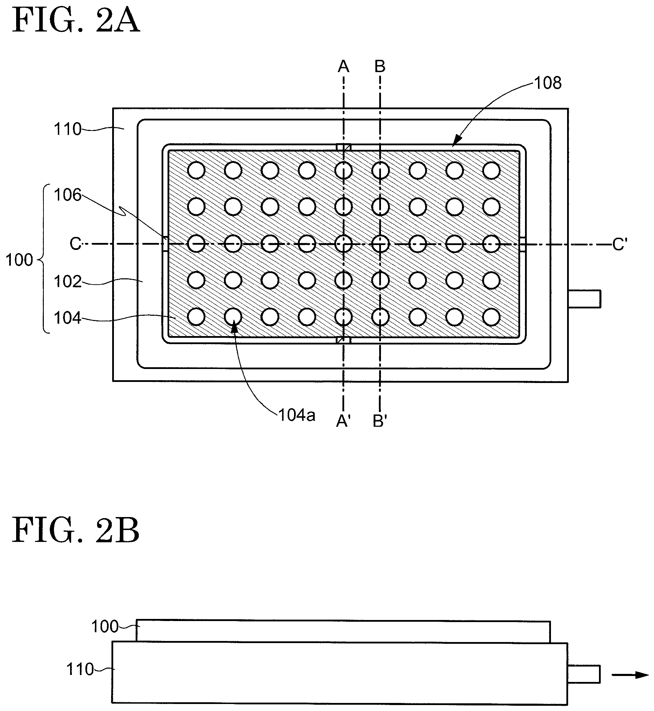

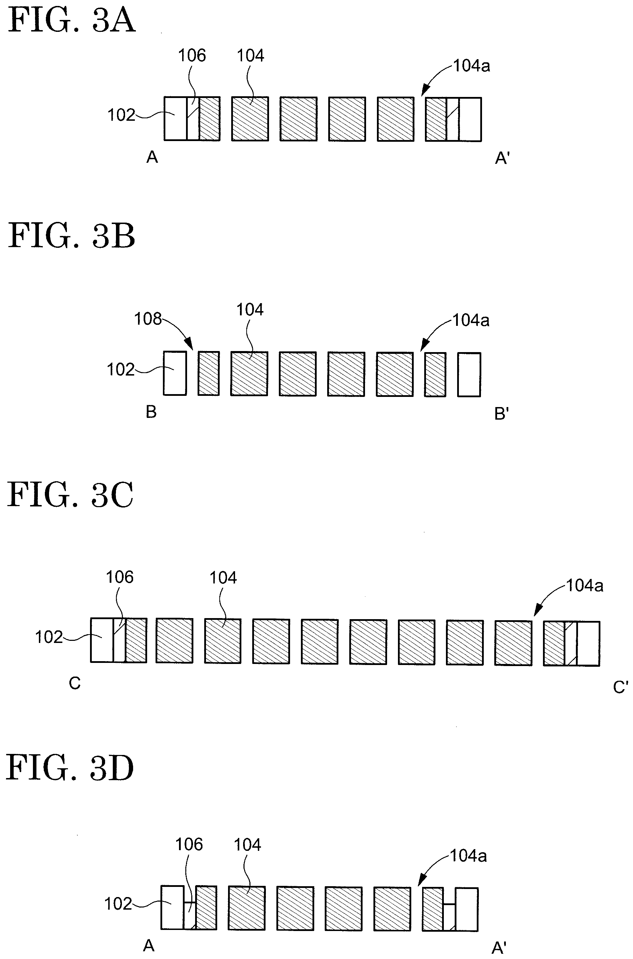

A schematic top view of the jig 100 is shown in FIG. 2A, and schematic views of the cross sections along the chain lines A-A', B-B', and C-C' in FIG. 2A are respectively shown in FIG. 3A to FIG. 3C. As shown in FIG. 2A, the jig 100 has at least one stage 104 and a frame 102 surrounding the stage 104. As shown in FIG. 2B, a suction table 110 is arranged under the jig 100. The thicknesses of the stage 104 and the frame 102 may be determined according to the size thereof and is, for example, equal to or greater than 1 mm and equal to or less than 10 mm.

The stage 104 and the frame 102 are not in direct contact with each other and are spaced away from each other. However, the stage 104 and the frame 102 are connected by at least one connecting portion 106. Therefore, a gap (groove) 108 is formed between the stage 104 and the frame 102 (see FIG. 2A and FIG. 3B). As described below, the mother sheet 130 arranged so as to overlap the gap 108 is irradiated with laser light along the gap 108, by which the mother sheet 130 is cut and the porous titanium sheet is cut out. Therefore, the shape of the gap 108 substantially determines the shape of the porous titanium sheet. The shape of the gap 108 is determined by the outer circumference shape of the stage 104. In other words, the outer circumference shape of the stage 104 may be selected as appropriate according to the shape of the porous titanium sheet to be manufactured and may be, for example, a polygon including a square, a circle, an oval, or a shape defined by a contour composed of a curve and a straight line.

The stage 104, the frame 102, and the connecting portion 106 include, for example, a metal. Preferably, these components each contain titanium and more preferably consist of titanium with 99 wt% or more, which is referred to as industrially pure titanium. Contamination during cutting of the mother sheet 130 can be prevented when the stage 104, the frame 102, and the connecting portion 106 contain high-purity titanium. As a result, contamination of impurities to the porous titanium sheet can be prevented.

Alternatively, at least one of the stage 104, the frame 102, and the connecting portion 106 may include a resin or wood. Examples of resins include polypropylene, a polycarbonate, an acrylic resin, and engineering plastics such as a poly(ether ether ketone), polytetrafluoroethylene, a polyamide, polyacetal, a modified poly(phenylene ether), poly(butylene terephthalate), and a poly(phenylene sulfide). The use of a resin or wood enables the weight reduction of the jig 100.

As shown in FIG. 2A to FIG. 3C, the stage 104 is provided with at least one through hole 104a passing through the stage 104 in a direction perpendicular to the top surface thereof. The at least one through hole 104a may include a plurality of through holes 104a. The plurality of through holes 104a are preferably arranged in a uniform density, *i.e*., a constant pitch. The pitch of the through holes 104a may be set to be, for example, equal to or greater than 30 mm and equal to or less than 70 mm. The shape of the through hole 104a (shape on the top surface of the stage 104) is, for example, a circle or a polygon. In the latter case, each corner may be rounded. The size of the at least one through hole 104a may also be determined as appropriate. For example, when the shape of the through hole 104a is a circle, its diameter may be selected from a range equal to or greater than 10 mm and equal to or less than 30 mm. When the shape of the through hole 104a is polygonal, its area may be equivalent to the area of the circular through hole 104a described above. The plurality of through holes 104a may be arranged in a matrix form or may be arranged to occupy apexes of a honeycomb structure.

As mentioned above, the frame 102 surrounds the stage 104. Therefore, the shape of the inner circumference shape of the frame (the contour on the top surface of the frame 102 on the side of the stage 104) is substantially analogous to the outer circumference shape of the stage 104. The inner circumference shape of the frame 102 is preferably set so that the width of the gap 108 between the frame 102 and the stage 104 is equal to or greater than 1 mm and equal to or less than 10 mm and is typically equal to or greater than 3 mm and equal to or less than 6 mm. As described below, the mother sheet 130 is adsorbed on the frame 102 and the stage 104 in a state where the mother sheets 130 covers the gap 108. Thus, the width of the gap 108 in the above range suppresses the bending of the mother sheet 130 over the gap 108, by which precise cutting can be realized.

The at least one connecting portion 106 connecting the stage 104 and the frame 102 may include a plurality of connecting portions 106. The connecting portion 106 is provided to block a portion of the gap 108. Thus, the number of connecting portions 106 is usually the same as the number of gaps 108. The positions of the connecting portions 106 may be determined as appropriate so as to maintain a stable positional relationship between the stage 104 and the frame 102. Preferably, a pair of connecting portions 106 is provided to the jig 100 so as to sandwich the stage 104. In addition, plural pairs of connecting portions 106 sandwiching the stage 104 in directions intersecting each other as shown in FIG. 2A. The positional relationship between the stage 104 and the frame 102 is fixed by connecting the stage 104 and the frame 102 with the connecting portion 106. That is, the shape of the gap 108 which substantially determines the shape of the porous sheet obtained by cutting the mother sheet 130 can be fixed. As a result, porous sheets with a fixed shape can be efficiently mass-produced. The width of the connecting portion 106 (length in a direction perpendicular to the side surfaces of the stage 104 and the frame 102) corresponds to the width of the gap 108. Therefore, the width of the connecting portion may be set to be equal to or greater than 1 mm and equal to or less than 10 mm, typically equal to or greater than 3 mm and equal to or less than 6 mm. Generally, when cutting a porous metal sheet, a protrusion called a burr (a protrusion protruding from the peripheral portion toward a side of one of the main surfaces, where the main surface opposite to the protruding direction is flat or almost flat) may be generated. From the viewpoint of suppressing the generation of burrs on the porous titanium sheet during cutting, the length of the connecting portion 106 (the length in the extending direction of the gap 108 blocked by the connecting portion 106) is preferred to be short to some extent and is, for example, equal to or longer than 0.5 mm and equal to or less than 50 mm.

The thickness (a length in the extending direction of the through hole 104a) of the connecting portion 106 may be the same as the thickness of the stage 104 or the frame 102 or may be smaller than the thickness of the stage 104 or the frame 102 as shown in FIG. 3D. In the former case, the top surface of the connecting portion 106 is coplanar with the top surfaces of the stage 104 and the frame 102. In the latter case, the height of the top surface of the connecting portion 106 is lower than the top surface of the stage 104 or the frame 102. In other words, the top surface of the connecting portion 106 is located on the underside of the stage 104 and the frame 102 compared to the top surface of the stage 104 or the frame 102. When the height of the top surface of the connecting portion 106 is set to be lower than the top surface of the stage 104 or the frame 102, contact between the connecting portion 106 and the mother sheet 130 can be prevented, by which the generation of burrs can be more effectively prevented. Although not illustrated, the lower surface of the connecting portion 106 may be located on the upper surface side of the stage 104 and the frame 102 compared to the lower surface of the stage 104 or the frame 102.

The suction table 110 is connected to an exhaust device which is not illustrated to create negative pressure over the suction table 110. As described below, the mother sheet 130 is arranged on the jig 100 during cutting. Therefore, the gas in the through hole 104a and the gap 108 of the jig 100 is sucked through the suction table 110 by using the exhaust device (see the arrow in FIG. 2B), and as a result, the mother sheet 130 is adsorbed onto the jig 100.

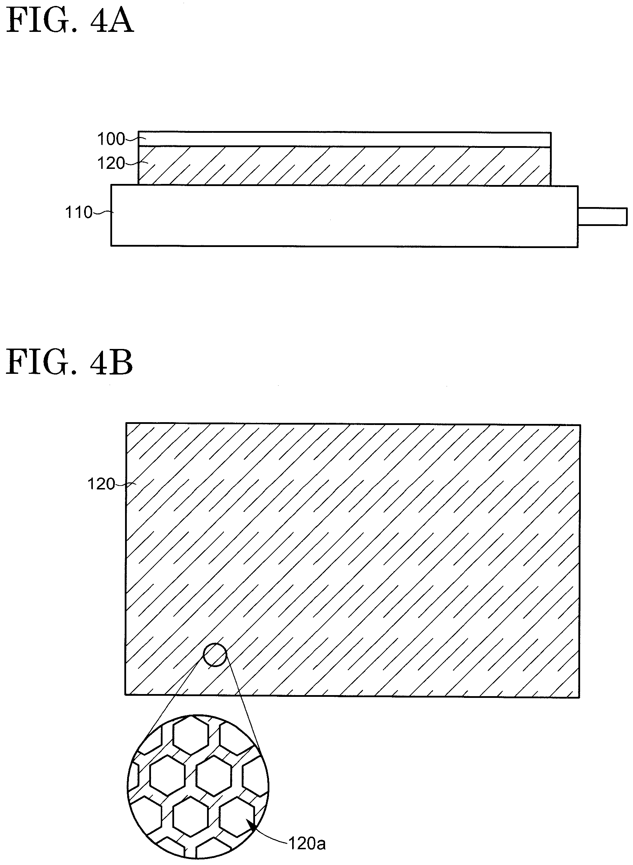

As shown in FIG. 4A, an airflow-adjusting table 120 may be arranged between the jig 100 and the suction table 110. Alternatively, the suction table 110 may be integrated with the airflow-adjusting table 120. As schematically shown in FIG. 4B, the airflow-adjusting table 120 is a supporting table having a greater number of through holes 120a with a smaller shape than the through hole 104a of the stage 104. The through holes 120a extend in a direction perpendicular to the top surface of the airflow-adjusting table 120. Although there are no restrictions on the shape (shape on the top surface of the airflow-adjusting table 120a and arrangement of the through holes 120a), it is preferable to arrange the through holes 120a having a hexagonal shape in a honeycomb shape in order to arrange the through holes 120a at a high density. Since the airflow created by the suction table 110 can be made uniform by providing the airflow-adjusting table 120, the mother sheet 130 can be adsorbed onto the jig 100 with uniform force over the entire mother sheet 130.

### (b) Cutting Mother Sheet

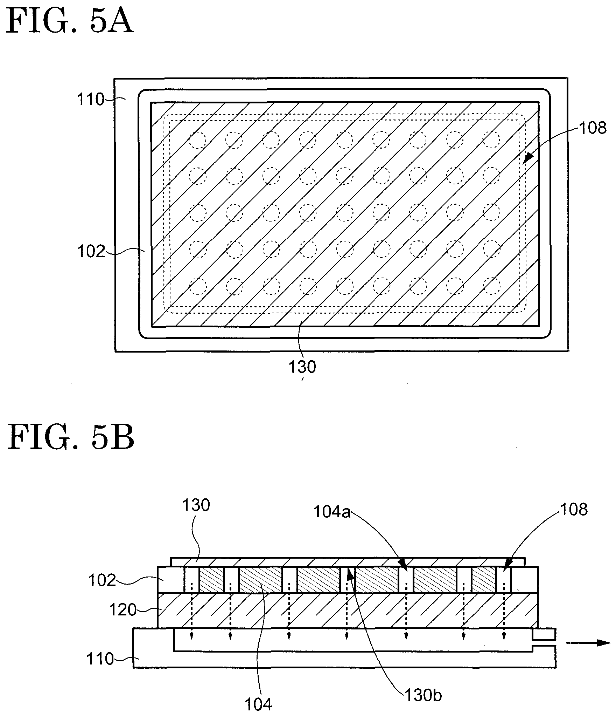

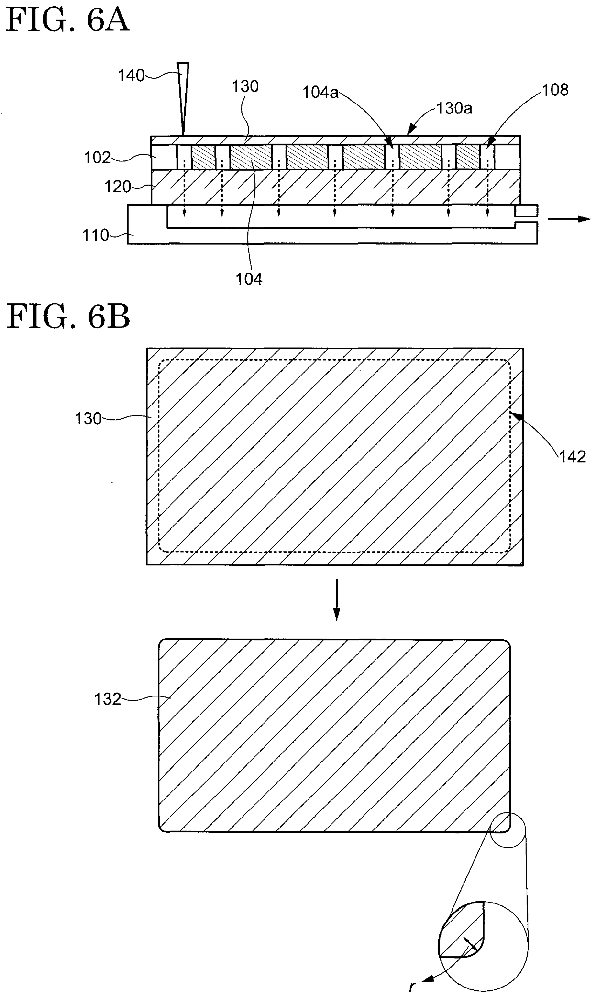

The cutting of the mother sheet 130 using the jig 100 is described with reference to FIG. 5A through FIG. 6B. FIG. 5A is a schematic top view corresponding to FIG. 2A, while FIG. 5B and FIG. 6A are schematic cross-sectional views corresponding to FIG. 3A.

First, the mother sheet 130 is arranged over the jig 100. At this time, the mother sheet 130 is arranged over the jig 100 so as to overlap all of the through holes 104a and the entire gap 108 as shown in FIG. 5A and FIG. 5B. At this time, the mother sheet 130 is arranged over the jig 100 so that the back surface 130b is in contact with the stage 104. Moreover, the mother sheet 130 is arranged to cover the entire frame 102 or at least a portion of the frame 102. Thus, all of the through holes 104a and the gap 108 are covered by the mother sheet 130.

Suction by the exhaust device is then started (see the solid arrow in FIG. 5B). When suction is started via the suction table 110, the gas in the through holes 104a and the gap 108 is suctioned to the suction table 110 directly or via the airflow-adjusting table 120 (see the dotted arrows in FIG. 5B). As a result, the pressure in the through-holes 104a and the gap 108 become negative, and the mother sheet 130 is adsorbed and fixed to the jig 100.

Thereafter, the mother sheet 130 is cut using a fiber laser. Specifically, laser light 140 emitted from a fiber laser is applied onto the mother sheet 130 from the opposite side to the jig 100 as shown in FIG. 6A. That is, the laser light 140 is applied from the surface 130a side. A fiber laser is a type of solid-state laser utilizing an optical fiber as an amplifying medium. For example, a core at the center of the optical fiber is doped with a rare earth element such as ytterbium, and one or a plurality of cladding layers with a lower refractive index than the core is formed to surround the core. The wavelength of the laser light is equal to or longer than 1000 nm and equal to or shorter than 1200 nm, for example, and its output is adjusted to be equal to or greater than 50 W and equal to or less than 800 W, for example. The laser light is pulse-oscillated, and the pulse frequency thereof may be selected from a range equal to or greater than 400 Hz and equal to or less than 1200 Hz. The laser light is applied so that its focus is located on the surface of the mother sheet 130 or its vicinity (*e.g*., ±5 mm or less from the surface). The diameter of the laser light on the mother sheet 130 is adjusted to be equal to or greater than 40 µm and equal to or less than 200 µm. The scanning rate of the laser light may be adjusted according to the thickness and the number of mother sheets 130 and is, for example, equal to or greater than 1000 mm/min and equal to or less than 10000 mm/min. When applying the laser light, the whole or part of the environment in which the mother sheet 130 is cut is set to an atmosphere of inert gas such as nitrogen and argon and is preferably set to an argon atmosphere from the viewpoint of preventing coloration caused by nitriding of the cut surface. For example, inert gas may be sprayed as a shielding gas against the position, onto which the laser light is applied, in an atmospheric atmosphere. Alternatively, the entire jig 100 may be arranged under an inert gas atmosphere, and the laser light may be applied. As a result, scanning with the laser light can be carried out under an inert gas atmosphere, thereby suppressing oxidation and nitridation of the mother sheet 130 as well as resulting contamination and discoloration.

Scanning of the mother sheet 130 with the laser light is carried out along the gap 108. Scanning of the laser light is carried out over the gap 108 and the connecting portion 106 from the irradiation start position to return to the irradiation start position again, by which the mother sheet 130 is cut along the scanning path 142 of the laser light as shown in FIG. 6B, by which the porous titanium sheet 132 having a shape reflecting the shape of the gap 108 can be cut out. When the top surface of the connecting portion 106 is coplanar with the top surface of the stage 104 or the frame 102, the laser light is applied in the state where the mother sheet 130 is in contact with the connecting portion 106. However, damage to the connecting portion 106 can be prevented by setting the laser light output and/or the scanning rate within the range described above. Therefore, the jig 100 can be used repeatedly.

When applying the laser light, the scanning direction bends 90° at the corner of the gap 108. At this time, the laser light may be applied so that the scanning path of the laser light has an arc shape at the corner of the gap 108. As a result, the corners of the porous titanium sheet 132 can be chamfered, and the porous titanium sheet 132 with arc-shaped corners can be obtained (FIG. 6B). The chamfer radius r can also be set arbitrarily and may be set appropriately within a range equal to or greater than 1 mm and equal to or less than 15 mm, for example.

The waterjet method has been known as a method for cutting porous metal sheets. However, since abrasives are used in the waterjet method, abrasives may remain on the porous titanium sheet when the cleaning after cutting is not sufficiently carried out. In addition, in the method of cutting porous metal sheets using a carbon-dioxide laser, it is difficult to avoid the generation of burrs in the process of melting and solidifying the cutting surface. In general, burrs with a height (or length) of approximately 100 µm or less can be physically removed using a spatula or the like. However, burrs larger than this size cannot be readily removed. When large burrs are generated on the cutting surface, the characteristics of porous metal sheets as well as the characteristics and reliability of a variety of devices utilizing the porous metal sheets are affected. For example, when a porous titanium sheet is used as the porous transporting layer in a PEM-type water-electrolysis apparatus, damage to the adjacent ion exchange membrane may be induced.

On the other hand, in the manufacturing method of the porous titanium sheet according to an embodiment of the present invention, the mother sheet 130 is adsorbed onto the jig 100 and is scanned with laser light along a narrow gap 108 between the stage 104 and the frame 102 structuring the jig 100 to cut the mother sheet 130 as described above. Therefore, the mother sheet 130 can be cut in the state where the mother sheet 130 is fixed to the jig 100 without being significantly bent over the gap 108. Therefore, the mother sheet 130 can be precisely cut to produce the porous titanium sheet 132 having arbitrary shapes.

In addition, since the mother sheet 130 is cut using laser light, the porous titanium sheet 132 can be cut out in a short time of approximately several tens of seconds. Furthermore, since the cleaning and drying processes are unnecessary or can be simplified, the workload can be suppressed. Moreover, as demonstrated in the Examples, the generation of burrs can be effectively suppressed by using a fiber laser, and the generation of burrs, which may affect the characteristics of the porous titanium sheet 132 and the characteristics of devices using the porous titanium sheet 132, can be prevented. These features contribute to improved manufacturing efficiency and yield of the porous titanium sheet.

### (c) Modified Examples

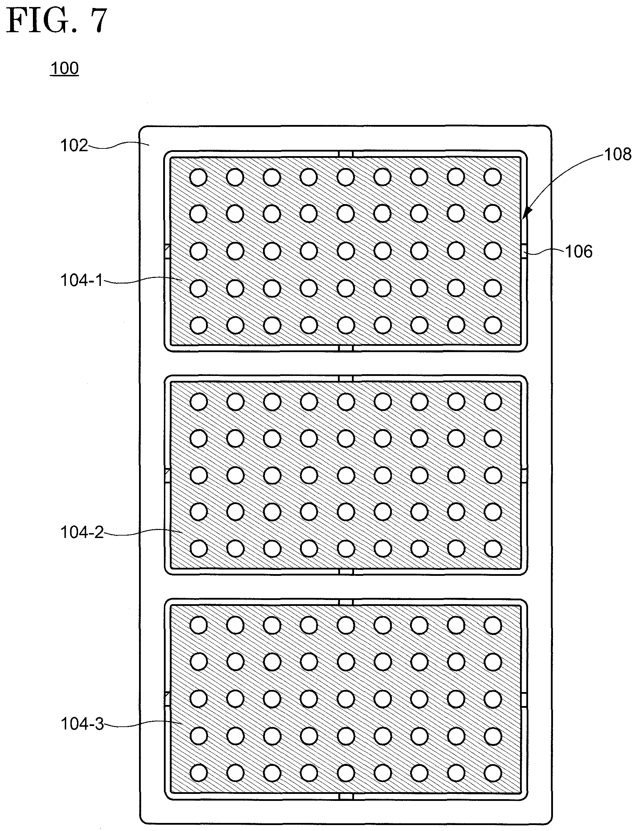

In the jig 100 described above, one stage 104 is surrounded by one frame 102. The structure of the jig 100 is not limited thereto, and the jig 100 may have a plurality of stages 104 and the frame 102 surrounding the stages as shown in FIG. 7. Each of the plurality of stages 104 is secured to the frame 102 by at least one connecting portion 106, preferably, by one or plural pairs of connecting portions 106. The number of stages 104 provided in one jig 100 is not limited and may be determined from a range equal to or greater than 2 and equal to or less than 20, for example. In the example shown in FIG. 7, three stages 104-1, 104-2, 104-3 are surrounded by the frame 102, and the gap 108 is formed between each stage 104 and the frame 102.

When using such a jig 100, a plurality of mother sheets 130 can be arranged and cut simultaneously. Alternatively, one mother sheet 130 is arranged so as to cover all of the stages 104 and the gap 108 and then the laser-light scanning is carried out along the gap 108, by which a plurality of porous titanium sheets 132 can be produced from one mother sheet 130. Since several hours to several days are usually required to produce one mother sheet 130, the production time per one porous titanium sheet 132 is relatively increased when producing one porous titanium sheet 132 from one mother sheet 130. In contrast, when a large mother sheet 130 is prepared and is cut to cut out a plurality of porous titanium sheets 132 therefrom, the manufacturing time per one porous titanium sheet 132 can be significantly reduced. Therefore, implementation of an embodiment of the present invention enables the production of the porous titanium sheet 132 at a low cost.

### 2. Characteristics of Porous Titanium Sheet

Hereinafter, the characteristics of the porous titanium sheet 132 produced according to the aforementioned manufacturing method are described.

As described above, the porous titanium sheet 132 is manufactured by cutting the mother sheet 130 using laser light 140 emitted from a fiber laser. Therefore, the composition, the thickness, and the porosity of the porous titanium sheet 132 are identical to those of the mother sheet 130. The composition can be determined by subtracting the content of metallic elements other than titanium and non-metallic elements from the total content (100%) of the porous titanium sheet 132. The content of metallic elements other than titanium can be measured, for example, using high-frequency inductively coupled plasma (ICP) emission spectrometry. The content of non-metallic elements such as chlorine, oxygen, carbon, nitrogen, and hydrogen can be determined respectively using the silver nitrate measurement method, the inert gas melting-infrared absorption method, the high frequency combustion-infrared absorption method, the inert gas melting-thermal conductivity method, and the inert gas melting-thermal conductivity method. The thickness can be measured using a thickness gauge, and the porosity can be calculated using the apparent density calculated from the volume and mass of the object and the true density of titanium.

Furthermore, unlike the porous titanium sheet obtained by cutting the mother sheet 130 with a water jet, the porous titanium sheet 132 produced by the above method does not contain components derived from abrasives. Specifically, fine particles containing inorganic compounds used as abrasives, such as silicon oxide, iron (III) oxide, aluminum oxide, magnesium oxide, calcium oxide, and manganese oxide are not included. For example, the effluent discharged when washing the porous titanium sheet 132 with water or the like does not contain fine particles constituting an abrasive. Therefore, even when the porous titanium sheet 132 is used in a PEM-type water-electrolysis apparatus, the elution of metal ions contained in an abrasive can be ignored, and contamination, deterioration, and damage and the like to the PEM-type water-electrolysis apparatus caused by these metal ions can be prevented.

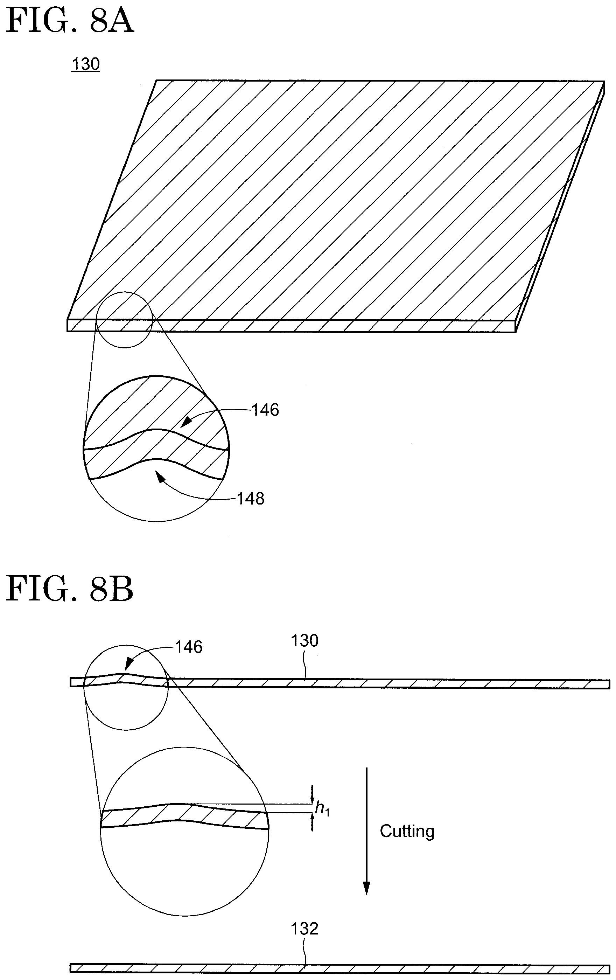

Due to the cutting process described above, the structure at the peripheral portion of the porous titanium sheet 132 differs from that of the mother sheet 130 before cutting. Specifically, the porous titanium sheet 132 has less deflection at the peripheral portion. As shown in FIG. 8A and FIG. 8B, a curved portion may be generated at the peripheral portion of the mother sheet 130 after sintering due to the deflection. Specifically, convex portions 146 protruding toward one surface side at the peripheral portion and concave portions 148 existing at the positions corresponding to the convex portions 146 and depressed toward the other surface side may be generated. The height of the curved portion, *i.e*., the height h₁ of the convex portion 146 (the height of the convex portion 146 with respect to the flat portion of the surface on which the convex portion 146 exists), is approximately 1 mm to 2 mm. However, since the peripheral portion where the deflection may be generated can be removed by cutting the mother sheet 130 (see FIG. 6B), there are no curved portions at the peripheral portion of the porous titanium sheet 132, or their height is very small (*e.g*., equal to or less than 0.1 mm) even if the curved portions are present.

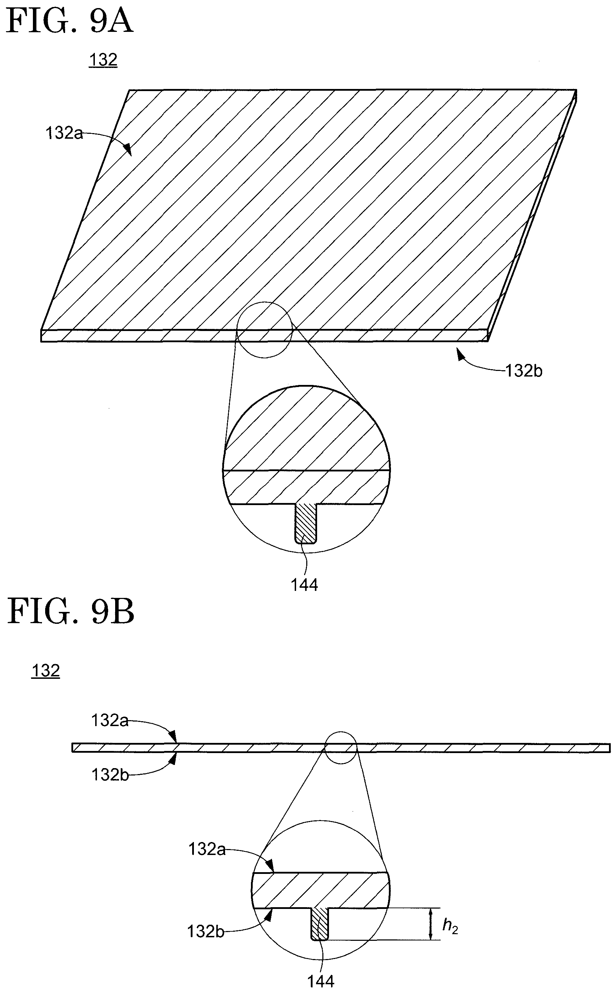

Moreover, there are very few burrs at the peripheral portion, and the size (height) thereof is extremely small even though the porous titanium sheet 132 is obtained by cutting the mother sheet 130. Specifically, the number of burrs protruding toward the side of the surface (hereinafter, referred to as a first main surface) of the porous titanium sheet 132 derived from the surface 130a of the mother sheet 130 (see FIG. 1) and having a height h₂ (the height of burr 144 with respect to the flat portion of the first main surface 132a) which is equal to or greater than 30 µm is equal to or less than the number of burrs 144 protruding toward the side of the surface (hereinafter, referred to as a second main surface) 132b of the porous titanium sheet 132 derived from the back surface 130b as shown in FIG. 9A and FIG. 9B. There is no burr 144 protruding toward the side of the first main surface 132a (*i.e*., the existence probability of the burrs 144 per peripheral portion with an arbitral length is 0), or the existence probability thereof is less than 0.1 per 100 mm length of the peripheral portion. Therefore, it is possible to omit the process of physically removing the burrs 144 protruding toward the side of the first main surface 132a. As described above, the smoothness of the surface 130a of the mother sheet 130 fabricated using the paste method is higher than that of the back surface 130b. Therefore, the first main surface 132a of the porous titanium sheet 132 not only has a high smoothness but also has fewer burrs, and the ion exchange membrane is not readily damaged when the first main surface 132a is pressed against an ion exchange membrane of the PEM-type water-electrolysis apparatus.

Furthermore, the number of burrs 144 protruding toward the side of the second main surface 132b is also extremely small and is equal to or greater than 0.0 and equal to or less than 3.0 per 100 mm length of the peripheral portion. Furthermore, the height of the burrs 144 protruding toward the side of the first main surface 132a or the side of the second main surface 132b is also suppressed, and the maximum height is equal to or less than 100 µm. That is, there are no burrs exceeding 100 µm. Therefore, even if the burrs 144 are generated, almost all of the burrs 144 can be physically removed using a spatula or the like. Even when the burrs 144 exist, the burrs 144 do not protrude in a direction parallel to the first main surface 132a or the second main surface 132b. That is, the burr 144 having a root wider than the tip is less likely to be generated. This is probably because no shearing force is applied to the mother sheet 130, unlike the method in which the porous titanium sheet 132 is fabricated by shearing the mother sheet 130 with a cutter or the like. As demonstrated in the Examples, this effect of suppressing the generation of burrs 144 results from the fact that the mother sheet 130 is cut using a laser light emitted from a fiber laser. Since there are no burrs 144 with a wide root in the direction parallel to the first main surface 132a or the second main surface 132b, it is possible to avoid the porous titanium sheet 132 from being gouged and damaged during the burr removal operation.

As described above, the porous titanium sheet 132 has few burrs 144 on the peripheral portion, and in particular, there are no burrs 144 or substantially no burrs 144 protruding toward the side of the first main surface 132a. Therefore, when arranging the components (*e.g*., ion exchange membranes and the like), which are used in the PEM-type water-electrolysis apparatus in a state of contacting with the porous titanium sheet 132, so as to be in contact with the first main surface 132a, the damage of these components can be effectively prevented. As a result, it is possible to greatly improve the life and reliability of the PEM-type water-electrolysis apparatus.

Note that, a coating may be applied to the surface of the porous titanium sheet, and the porous titanium sheet after coating is brought into contact with an ion exchange membrane or the like in order to improve the operational efficiency of the PEM-type water-electrolysis apparatus. This coating is usually a thin film, and the smoothness of the surface of the porous titanium sheet132 is maintained even after the coating. Therefore, the case where the porous titanium sheet after coating is brought into contact with ion-exchange membranes and the like can also be treated as a case where the porous titanium sheet is brought into contact with ion-exchange membranes and the like.

The shape of the mother sheet 130 is substantially determined by the process of applying the paste containing titanium fine particles or titanium fiber onto the substrate 150. Therefore, it is difficult to precisely control the shape of the corners of the mother sheet 130, and the corners take a complex shape composed of one or a plurality of straight lines and/or one or a plurality of curves. However, as described above, it is possible to form arc-shaped chamfered portions at the corners of the porous titanium sheet 132 by scanning the mother sheet 130 with laser light so as to form an arc at the stage of forming the corners of the porous titanium sheet 132 in the cutting process. Accordingly, it is possible to prevent damage to the porous titanium sheet 132 even if an external force is applied to the corners of the porous titanium sheet 132 and to prevent damage to other components which come into contact with the corners of the porous titanium sheet 132.

### 3. Usage of Porous Titanium Sheet

Again, the porous titanium sheet 132 of an embodiment of the invention can be suitably used in a PEM-type water-electrolysis apparatus and is particularly useful as a porous transporting layer. Therefore, an embodiment of the present invention is to use the porous titanium sheet 132 as a porous transporting layer in a polymer-electrolyte membrane-type water-electrolysis apparatus. At this time, it is preferable to arrange the porous titanium sheet 132 so that the components (*e.g*., ion exchange membrane and the like) in contact with the porous titanium sheet 132 are in contact with the first main surface 132a of the porous titanium sheet 132. However, the usage of the porous titanium sheet 132 is not limited thereto, and the porous titanium sheet 132 can be used in a variety of applications and devices, such as a variety of filters, electrode members for batteries, catalyst supports, and a variety of composite materials. In addition, an embodiment of the present invention is to produce hydrogen and oxygen using the porous titanium sheet 132 in a PEM-type water-electrolysis apparatus.

### EXAMPLES

### 1. Example 1

The paste method was applied to prepare a mother sheet, which is a sintered body of titanium fine particles, having a thickness of 160 µm to 170 µm and a porosity of approximately 40%. The size of the mother sheet was 400 mm x 500 mm. The mother sheet was arranged over the jig 100 shown in FIG. 2A so as to overlap the entirety of the stage 104 and the gap 108 and also overlap a portion of the frame 102. The stage 104, the frame 102, and the connecting portion 106 were all made of pure titanium equivalent to JIS Class 1, the top surface of the stage 104 was 100 mm x 200 mm, and the width of the gap 108 was 3 mm. The thicknesses of the stage 104 and the frame 102 were 1.5 mm. The mother sheet was then adsorbed onto the jig 100 using the suction table 110 through the airflow-adjusting table 120 made of aluminum.

In this state, a fiber laser (manufactured by Amada Corporation, model number PRELAS1212AJ) was used to irradiate the mother sheet with laser light (output 180 W, laser diameter 40 µm, pulse frequency 600 Hz) in the wavelength range equal to or longer than 1050 nm and equal to or shorter than 1100 nm along the gap 108 at a scanning rate of 5000 mm/min in the straight section. At this time, the laser light irradiation was performed while supplying nitrogen gas as a shielding gas to the position on which the laser light is applied. As a result, the mother sheet could be cut in approximately 15 seconds. Observation of the cut surface proved that no burrs with a maximum height exceeding 10 µm from the surface were generated. When the mother sheet was cut in the same way using argon gas as the shielding gas, no burrs with a maximum height exceeding 10 µm from the surface were observed, nor was coloration of the peripheral portion of the obtained porous titanium sheet observed.

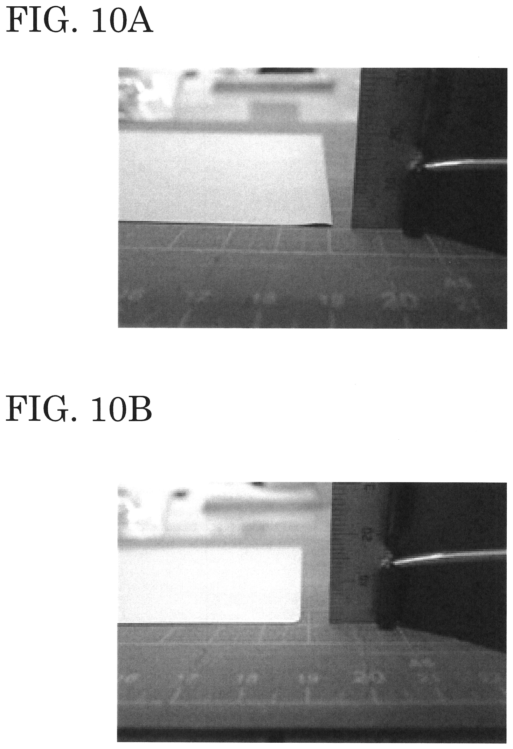

Photographs of the mother sheet and the porous titanium sheet obtained by cutting the mother sheet are shown in FIG. 10A and FIG. 10B, respectively. As can be understood from FIG. 10A, deflection is generated in a part of the peripheral portion of the mother sheet before being subjected to cutting, and the height thereof was approximately 1 mm to 2 mm. On the other hand, it was found that a porous titanium sheet without deflection was obtained over the entire peripheral portion by removing the deflection-generated portions by cutting. Note that when a pressure or heat is applied to a mother sheet in which deflection has been generated, the mother sheet may crack or porosity may decrease. Hence, it can be understood that it is possible to obtain a porous titanium sheet without deflection at the peripheral portion without causing damage or property degradation of the mother sheet by implementing an embodiment of the present invention.

### 2. Example 2

The jig 100 shown in FIG. 3D was used to cut the mother sheet in the same manner as in the Example 1. The difference in height between the top surface of the connecting portion 106 and the top surface of the stage 104 was set to be 1 mm. That is, the thickness of the connecting portion 106 was 0.5 mm. Argon gas was used as the shielding gas, and the mother sheet was cut in the same way as the Example 1. As a result, no burrs with a maximum height exceeding 10 µm from the surface were observed, nor was coloration of the peripheral portion of the obtained porous titanium sheet observed. Note that, although a few burrs with a maximum height of less than 10 µm from the surface are sometimes generated at the point where the connecting portion 106 and the mother sheet were in contact in the Example 1, it was confirmed that the generation of such small burrs could be almost completely prevented in the Example 2.

### 3. Comparative Example

As a comparative example, laser light emitted from a carbon-dioxide laser (manufactured by Amada Co., Ltd., model number FO-MII 2412NT) was used to cut the mother sheet in the same manner as the Examples 1 and 2. The wavelength of the laser light was set to be 11 µm, the laser diameter was set to be 150 µm, and the scanning rate of the laser light on the straight section was set to be 5000 mm/min. Nitrogen gas was used as the shielding gas. As a result, the mother sheet could be cut in approximately 15 seconds. However, it was confirmed that burrs with a maximum height of 170 µm from the surface were generated on the peripheral portion of the obtained porous titanium sheet.

### 4. Example 3

In the Example, the results of cutting a mother sheet prepared in a different batch from the Example 1 are explained. The fabricating method and the cutting method of the mother sheet were the same as those of the Example 1, but the shape of the top surface of the stage 104 was 50 mm x 70 mm. 240 mm of the side surface of two obtained porous titanium sheets (hereafter, referred to as samples A and B) were observed using an optical microscope to measure the number and height of burrs. The results are shown in Table 1.

**Table 1. Number and height of burrs of porous titanium sheet**

| Sample | Number of burrs | | | Total |
|---|---|---|---|---|
| | Height of 30 µm to 39 µm | Height of 40 µm to 49 µm | Height of 50 µm to 59 µm | |
| A | 7 | 2 | 1 | 10 |
| B | 1 | 2 | 0 | 3 |

As shown in Table 1, there were extremely few burrs with a height equal to or greater 30 µm, and no burrs protruding toward the side of the first main surface 132a (see FIG. 9A) were observed at all. It was confirmed from these results that the existence probability of burrs protruding on the side of the first main surface 132a and having a height equal to or greater than 30 µm is 0 and that the existence probability of burrs protruding on the side of the main surface 132b and having a height equal to or greater than 30 µm is equal to or less than 3.0 per 100 mm length of the peripheral portion. These results indicate that implementation of an embodiment of the present invention makes it possible to effectively suppress the generation of burrs and completely prevent the generation of burrs protruding toward a side of one surface (in this case, the first main surface 132a). Note that the burrs generated on the side of the second main surface 132b of the samples A and B could be easily removed using a spatula made of titanium metal. The removal of the burrs resulted in a burr-free porous titanium sheet on the first main surface 132a side and the second main surface 132b side.

The above results show that implementation of an embodiment of the present invention makes it possible to cut the mother sheet in a short time while suppressing the generation of burrs, by which porous titanium sheets having any desired shape can be efficiently produced. Although burrs of 100 µm or less can be easily removed, not only the burrs but also their vicinity are removed at the same time when burrs exceeding 100 µm in height are physically removed. Therefore, it can be said that an embodiment of the present invention enables the production of a porous titanium sheet having a desired flat shape with no burrs.

The aforementioned modes described as the embodiments of the present invention can be implemented by appropriately combining with each other as long as no contradiction is caused. Furthermore, any mode which is realized by persons ordinarily skilled in the art through the appropriate addition, deletion, or design change of elements or through the addition, deletion, or condition change of a process on the basis of the sensor module and the display device according to each embodiment is included in the scope of the present invention as long as they possess the concept of the present invention. It is understood that another effect different from that provided by each of the aforementioned embodiments is achieved by the present invention if the effect is obvious from the description in the specification or readily conceived by persons ordinarily skilled in the art.

### REFERENCES SIGNS LIST

100; Jig, 102: Frame, 104: Stage, 104-1: First stage, 104-2: Stage, 104-3: Stage, 104a: Through hole, 106: Connecting portion, 108: gap, 110; Suction table, 120: Airflow-adjusting table, 120a: Through hole, 130: Mother sheet, 130a: Surface, 130b: Back surface, 132: Porous titanium sheet, 132a: First main surface, 132b: Second main surface, 134: Paste, 136: Green body, 136a: Surface, 138: Brown body, 140: Laser light, 142: Scanning path, 144: Burrs, 146: Convex portion, 148: Concave portion, 150: Substrate, 152: Setter

## Claims

1. A porous titanium sheet having a thickness equal to or greater than 40 µm and equal to or less than 500 µm and porosity equal to or greater than 30% and equal to or less than 50%,
wherein a surface roughness of a first main surface is lower than a surface roughness of a second main surface opposing the first main surface, and
wherein a number of first protrusions protruding toward a side of the first main surface and having a height equal to or greater than 30 µm at a peripheral portion is equal to or less than a number of second protrusions protruding toward a side of the second main surface and having a height equal to or greater than 30 µm at the peripheral portion.

2. The porous titanium sheet according to claim 1,
wherein a maximum value of the height of the first protrusions and the second protrusions is equal to or less than 100 µm.

3. The porous titanium sheet according to claim 1 or 2,
wherein the number of the second protrusions is equal to or less than 3.0 per 100 mm of the peripheral portion.

4. The porous titanium sheet according to any of claims 1 to 3,
wherein the first protrusion is absent.

5. The porous titanium sheet according to any of claims 1 to 4,
wherein a corner has an arc shape.

6. The porous titanium sheet according to any of claims 1 to 5,
wherein the peripheral portion does not have a curved portion curved on a side of the first main surface or the second main surface and having a height exceeding 0.1 mm.

7. The porous titanium sheet according to any of claims 1 to 6, produced by cutting a mother sheet having a larger area than the porous titanium sheet using a fiber laser.

8. A usage of the porous titanium sheet according to any of claims 1 to 7 as a porous transporting layer in a polymer-electrolyte membrane-type water-electrolysis apparatus.

9. The usage according to claim 8,
wherein the polymer-electrolyte membrane-type water-electrolysis apparatus comprises an ion-exchange membrane, and
wherein the ion-exchange membrane is arranged so as to be in contact with the first main surface of the porous titanium sheet.

10. A method for manufacturing hydrogen using the porous titanium sheet according to any of claims 1 to 7 in a polymer-electrolyte membrane-type water-electrolysis apparatus.

11. A manufacturing method of a porous titanium sheet comprising:
arranging a mother sheet including porous titanium on a jig comprising at least one stage having at least one through hole, a frame surrounding the at least one stage and spaced away from the at least one stage, and at least one connecting portion connecting the at least one stage and the frame so as to cover the at least one through hole and a gap between the at least one stage and the frame;
adsorbing the mother sheet over the jig; and
scanning the mother sheet with laser light emitted from a fiber laser along the gap to cut the mother sheet.

12. The manufacturing method according to claim 11,
wherein an upper surface of the at least one connecting portion is located on a side of lower surfaces of the at least one stage and the frame with respect to upper surfaces of the at least one stage and the frame.

13. The manufacturing method according to claim 11 or 12,
wherein the at least one stage and the frame contain pure titanium.

14. The manufacturing method according to any of claims 11 to 13,
wherein a wavelength of the laser light is equal to or longer than 1000 nm and equal to or less than 1200 nm.

15. The manufacturing method according to any of claims 11 to 14,
wherein the laser-light scanning is performed under an argon atmosphere.

16. The manufacturing method according to any of claims 11 to 15,
wherein a porosity of the mother sheet is equal to or greater than 30% and equal to or less than 50%.
